# EUROPEAN PATENT APPLICATION

(11) **EP 3 340 679 A1**
(43) Date of publication of application: **27.06.2018**
(21) Application number: 16306756.4
(22) Date of filing: 21.12.2016
(51) Int. Cl.: H04W 36/00, H04W 84/12

(54) **METHOD FOR DETERMINING A RADIO DEVICE TO BE USED BY A USER DEVICE**

(71) Applicant: Alcatel Lucent, 91620 Nozay (FR)
(72) Inventor: Ligata, Amir, 2018 Antwerp (BE); Gacanin, Haris, 2018 Antwerp (BE)
(74) Representative: D'Halleweyn, Nele Veerle Trees Gertrudis

(57) **Abstract**

Method for determining a radio device to be used by a user device being currently connected to a radio device of multiple radio devices to which the user device can connect; each radio device being part of an access point or of an extender connected in a wireless or wired manner to an access point; said method comprising: obtaining radio data for the radio devices; obtaining empirical data for the radio devices comprising at least a plurality of respective measures based on the throughput between the user device and the radio devices; obtaining signal strength data from the user device for the radio devices; selecting a radio device from the radio devices, based on said obtained radio data, said obtained empirical data, and said obtained signal strength data; and at least if the selected radio device is different from the currently connected radio device, informing the user device about the selected device.

## Description

### Field of Invention

The field of the invention relates to methods, devices and computer program products for determining a radio device to be used by a user device. Particular embodiments relate to the field of determining a radio device to be used by a user device in a home network with at least one access point.

### Background

Future home networks, in particular indoor networks with a wireless connection component, are promising uniform coverage and throughput(i.e., quality of experience). While very high frequency bands (e.g. 60 GHz) with limited coverage are expected to dominate, greater numbers of access nodes and extenders may be required, in order to satisfy Gbps demands, which makes their deployment challenging for an operator.

Wi-Fi networks have evolved over the years in order to cope with the rising requirements of an end users in terms of high demanding applications. To this end, a vast majority of Wi-Fi access points (APs) and Wi-Fi chipsets embedded in mobile devices support both frequency bands and the latest Wi-Fi standards. Furthermore, stretched home layouts, various forms of obstacles and user mobility have urged the use of additional access point extenders, with the aim of eliminating coverage holes, particularly in indoor environments.

According to existing methods, a user device connects to Wi-Fi radios, in particular to SSID profiles, based on signal strength and saved profiles. Typically, if a user device is connected to a given radio, it will remain connected to that given radio as long as the signal is sufficiently strong to maintain the connection. Only when the connection is lost, e.g. because the signal strength falls below a predetermined connection threshold, a user device initiates reconnection to another radio based on signal strength and saved profiles, if such another radio with a sufficient signal strength exists. There are several drawbacks with this approach: the user device remains connected to the same initial radio for a wide range of RSSI ((i.e. Receive Signal Strength Indication) values; a selection on the highest signal strength does not necessarily yield the best performance.

### Summary

The object of exemplary embodiments of the invention is to provide an improved method for determining a radio to be used by a user device, and more in particular a method which allows increasing the user experience. Further, objects of exemplary embodiments of the invention are to provide a computer program product capable of performing such an improved method, as well as an operator server, a user device and an access point suitable to be used in such improved methods.

According to a first aspect of the invention there is provided a method for determining a radio device to be used by a user device. The user device is assumed to be currently connected to a radio device of a plurality of radio devices to which the user device can connect. Each radio device of said plurality of radio devices is part of an access point or of an extender connected in a wireless or wired manner to an access point. The method comprising the steps of:
- obtaining radio data for the plurality of radio devices;
- obtaining empirical data for said plurality of radio devices, said empirical data comprising at least a plurality of respective measures based on the throughput between the user device and the plurality of radio devices;
- obtaining signal strength data from the user device for said plurality of radio devices;
- selecting a radio device from said plurality of radio devices, based on said obtained radio data, said obtained empirical data, and said obtained signal strength data; and
- at least if the selected radio device is different from the currently connected radio device, informing the user device about the selected device.

In the context of the present invention, the term "radio device" refers to a radio functionality in an access point or extender, allowing the access point or extender to communicate wirelessly with the user device. For example, an access point will typically comprise two radio devices, a first radio device operating in a first frequency band and a second radio device operating in a second frequency band. It is further noted that the informing of the user device about the selected radio device will be done at least of the selected radio device is different from the currently connected radio device, but such information could also be obtained periodically at the user device, wherein the user device main decide whether or not to connect to the selected device. In an embodiment the informing of the user device may consist in instructing the user device to connect to the selected radio device.

Embodiments of the invention are based *inter alia* on the inventive insight that when selecting a suitable radio device, the RSSI value measured by the user device is not the only parameter influencing the performance of a connection between the user device and a radio device. Further by selecting a specific radio device, the best suitable operating frequency band can be selected when multiple frequency bands are available. Further embodiments of the method allow making a distinction between an access point and an extender connected wirelessly or in a wired manner to the access point. By using the obtained radio data for the plurality of radio devices, the obtained empirical data, and the obtained signal strength data of the connection between the user device and the plurality of radio devices, an improved selection of a radio device to be used can be made.

According to an exemplary embodiment the step of selecting a radio device comprises:
- determining an ordered performance list of said plurality of radio devices based on at least the obtained radio data and the obtained empirical data; in other words, a hierarchy of the plurality of radio devices to which the user device can connect is determined based on the identified network (the obtained radio data) and empirical data known for similar network setups;
- verifying for a radio device with the best performance of said ordered performance list, whether an obtained value from the obtained signal strength data meets a predetermined condition, e.g. verifying whether the obtained value is higher than a predetermined threshold value; and
- if the condition is met, selecting the radio device with the best performance;
- if the condition is not met, repeating the step of verifying for the next best radio device of the ordered performance list, etc. until a radio device of the list is selected. If no radio device is found to meet the predetermined condition for that radio device, it may be determined that the user device is in a coverage hole.

According to an exemplary embodiment the step of determining an ordered performance list is further based on the obtained signal strength data. By using the obtained signal strength data, the accuracy of the ordered performance list may be further improved.

According to an exemplary embodiment the obtained radio data includes:
- for each radio device of an access point: an operating frequency band;
- for each radio device of an extender: a backhaul interface type comprising wireless or wired; and a fronthaul operating frequency band.
For example, an access point may comprise a first radio device with a first operating frequency band, e.g. a band around 2.4 GHz, and a second radio device with a second operating frequency band, e.g. a band around 5 GHz.
For example, an extender may have a wired backhaul interface and comprise a first radio device with a first fronthaul operating frequency band, e.g. a band around 2.4 GHz, and a second radio device with a second fronthaul operating frequency band, e.g. a band around 5 GHz.

According to an exemplary embodiment the empirical data comprises a measure based the throughput between the user device and the plurality of radio devices, i.e. for each frequency band separately of an access point or an extender. The plurality of measures may be ranking values based on any one or more of expertise, experimental investigations, measurements performed by a user device using an app, etc.

According to an exemplary embodiment the obtained radio data is derived from an SSID profile of the access point. For example, in embodiments of the invention a TR-98/181 standard compliant access point may be used. Such an access point allows to collect data related to the access point itself, as well as data related to associated devices on wireless and Ethernet interfaces, such as
Device.WiFi.SSID.{i}.
Device.WiFi.AccessPoint.{i}.AssociatedDevice.{i}.
Device.Ethernet.Interface.{i}.

According to an exemplary embodiment the obtained signal strength data comprises an RSSI value for the connected radio device and Wi-Fi-scan data for the other radio device(s) of said plurality of radio devices.

According to an exemplary embodiment there is provided an operator server remotely of said plurality of radio devices. The step of obtaining radio data may comprise receiving the radio data at the operator server from the access point. The step of obtaining empirical data may be performed at the operator server. The step of obtaining signal strength data from the user device for said plurality of radio devices may comprise receiving said signal strength data at an operator server from the user device. The step of selecting a radio device from said plurality of radio devices may be performed at the operator server. The step of informing the user device may comprise sending an instruction from the operator server to the user device.

According to another exemplary embodiment the step of obtaining radio data may comprise receiving the radio data at the operator server from the access point. The step of obtaining empirical data may be performed at the operator server. The step of obtaining signal strength data between the user device and said plurality of radio devices may be performed at the user device. The step of selecting a radio device may comprise:
- at said operator server, determining an ordered performance list of said plurality of radio devices based on at least the obtained radio data and the obtained empirical data;
- sending the ordered performance list to the user device;
- at said user device, selecting a radio device of said plurality of radio devices based on the received ordered performance list and the obtained signal strength data.

According to yet another exemplary embodiment the step of obtaining radio data is performed at an access point. The step of obtaining empirical data may then comprise receiving empirical data from the operator server at said access point. The step of obtaining signal strength data between the user device and said plurality of radio devices may comprise receiving said signal strength data from the user device at said access point. The step of selecting a radio device may be performed at the access point. The step of informing the user device comprises sending an instruction from said access point to said user device.

According to another aspect of the invention there is provided an operator server configured for determining a radio device to be used by a user device. The user device is supposed to be currently connected to a radio device of a plurality of radio devices to which the user device can connect. Each radio device of said plurality of radio devices is part of an access point or of an extender connected in a wireless or wired manner to the access point. The operator server is configured:
- to receive radio data for the plurality of radio devices, of the access point;
- to obtain empirical data for said plurality of radio devices, said empirical data comprising at least a plurality of respective measures based on the throughput between the user device and the plurality of radio devices;
- to receive signal strength data from the user device for said plurality of radio devices;
- to select a radio device from said plurality of radio devices, based on said received radio data, said obtained empirical data, and said received signal strength data;
- at least if the selected radio device is different from the currently connected radio device, to send an instruction to the user device to connect to the selected radio device.

According to another aspect of the invention there is provided a user device. The user device may be currently connected to a radio device of a plurality of radio devices to which the user device can connect. Each radio device of said plurality of radio devices may be part of an access point or of an extender connected in a wireless or wired manner to an access point. The user device is configured to receive from a remotely located operator server a selected radio device of said plurality of radio devices; and, if the selected radio device is different from the currently connected radio device, to connect to the selected radio device.

According to another aspect of the invention there is provided an operator server configured for communicating with a user device. The user device may be currently connected to a radio device of a plurality of radio devices to which the user device can connect. Each radio device of said plurality of radio devices may be part of an access point or of an extender connected in a wireless or wired manner to an access point. The operator server is configured to receive radio data for the plurality of radio devices, from an access point; to obtain empirical data for said plurality of radio devices, said empirical data comprising at least a plurality of respective measures based on the throughput between the user device and the plurality of radio devices; to determine an ordered performance list of said plurality of radio devices based on at least the received radio data and the obtained empirical data; and to send the ordered performance list to the user device.

According to another aspect of the invention there is provided a user device configured to receive from an operator server an ordered performance list of a plurality of radio devices to which the user device can connect, wherein the order of the ordered performance list is based on at least radio data for the plurality of radio devices and empirical data for the plurality of radio devices, said empirical data comprising at least a plurality of respective measures based on the throughput between the user device and the plurality of respective radio devices; to select a radio device from the plurality of radio devices based on the received ordered performance list and signal strength data between the user device and said plurality of radio devices; and, if the selected radio device is different from the currently connected radio device, to connect to the selected radio device.

According to another aspect of the invention there is provided an access point configured for determining a radio device to be used by a user device. The access point is configured to obtain radio data for a plurality of radio devices to which the user device can connect; to receive empirical data for said plurality of radio devices, from a remotely located operator server; said empirical data comprising at least a plurality of respective measures based on the throughput between the user device and the plurality of radio devices; to receive signal strength data from the user device for said plurality of radio devices; to select a radio device from said plurality of radio devices, based on said obtained radio data, said received empirical data, and said received signal strength data; and, if the selected radio device is different from the currently connected radio device, to send an instruction to the user device to connect to the selected radio device.

According to another aspect of the invention there is provided a user device. The user device may be currently connected to a radio device of a plurality of radio devices to which the user device can connect. Each radio device of said plurality of radio devices may be part of an access point or of an extender connected in a wireless or wired manner to an access point. The user device is configured to receive from an access point or an extender a selected radio device of said plurality of radio devices; and, if the selected radio device is different from a currently connected radio device, to connect to the selected radio device.

Exemplary features disclosed above for the method are equally applicable for the operator server, the user device and the access point as will be immediately apparent to a person skilled in the art.

According to a further aspect of the invention, there is provided a computer program comprising computer-executable instructions to perform the method, when the program is run on a computer, according to any one of the steps of any one of the embodiments disclosed above. According to a further aspect of the invention, there is provided a computer program product, a computer device or other hardware device programmed to perform one or more steps of any one of the embodiments of the method disclosed above. According to another aspect there is provided a digital data storage device or medium encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically an embodiment of a typical home network architecture with an access point and the plurality of extenders;
Figure 2 illustrates a flow diagram of an exemplary embodiment of the method;
Figure 3 illustrates an exemplary embodiment of step 2004 of figure 2;
Figure 4 is a flow diagram of an exemplary embodiment of the method;
Figure 5 is a flow diagram of an exemplary embodiment of the method;
Figure 6 is a schematic diagram of an exemplary embodiment of the method;
Figure 7A is a chart illustrating RSSI (dBm) and throughput (Mbps) in function of coverage for two operating frequency bands for a user device connected to a main access point; and
Figure 7B is a chart illustrating RSSI (dBm) and throughput (Mbps) in function of coverage for two operating frequency bands for an extender.

### Description of embodiments

The present invention relates to home network redeployment. Particular embodiments relate to a method for optimizing a deployment of an access network in a home network. In this context, it is to be noted that a home network may refer to a wireless local area network, in particular for indoors residential use. Such wireless local area networks may for example include networks according to the standard IEEE 802.11 of the Institute of Electrical and Electronics Engineers, but it will be understood that other types of networks may also be used.

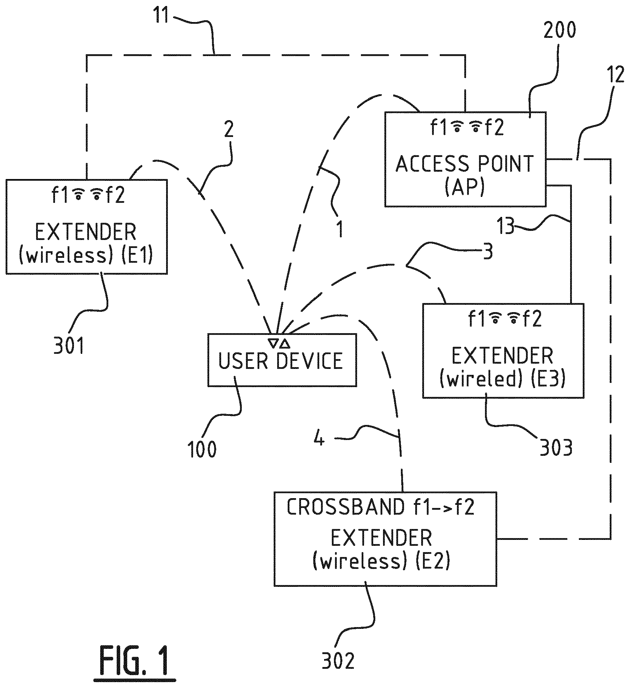

Figure 1 schematically illustrates an embodiment of a home network with an access point 200. Access point may comprise a backhaul interface and a fronthaul interface. The backhaul interface may be coupled to a backbone network (not shown), e.g. an IP network such as the Internet. The coupling may be direct or may be indirect via another access node (not shown) - such an other access node may also be called "a master access node". The fronthaul interface may be coupled to a user device 100, e.g. a set-top box, a desktop computer, a laptop computer, a smartphone, and the like. The coupling may be direct or may be indirect via an extender 301, 302, 303. The front hole interface can operate in two frequency bands indicated in figure 1 as f1 and f2. In typical embodiments these frequency bands may be a frequency band around 2.4 GHz, and a frequency band around 5 GHz.

The home network further comprises a plurality of extenders 301, 302, 303. Each extender 301, 302, 303 has a backhaul interface and a fronthaul interface. The backhaul interfaces of extenders 301, 302, 303 are connected to access point 200. Extenders 301 and 302 have a wireless backhaul interface, while extender 303 has a wired backhaul interface.

In the illustrated example of figure 1 there is provided only access point 200 in combination with three extenders 301, 302, 303 connected to access point 200, but the skilled person understands that more than one access point may be provided, and that the extenders may be coupled with their backhaul interface to different access points.

In the illustrated example, extender 301 (E1) has a fronthaul interface which can operate in two frequency bands indicated as f1 and f2 in figure 1. Typically, these frequency bands will be a frequency band around 2.4 GHz and a frequency band around 5 GHz. Extender 302 (E2) is a so-called crossband extender with a wireless backhaul interface with a frequency f2 and with a wireless fronthaul interface with a frequency f1. Extender 303 (E3) is an extender with a wired backhaul interface and with a wireless fronthaul interface capable of operating in two frequency bands indicated as f1 and f2 in figure 1. Also for extender 303 the frequency bands may be for example a first frequency band around 2.4 GHz and a second frequency band around 5 GHz. The wireless connection between user device 100 and access point 200 is indicated with line 1. The wireless connection between user device 100 and extenders 301, 302, 303 is indicated with lines 2, 3, 4, respectively. Lines 11 and 12 indicate the wireless connection between extenders 301, 302 and the access point 200, respectively. Line 13 indicates the wire connection between extender 303 and access point 200.

In the illustrated example, user device 100 has multiple options in terms of possible connections; indeed, user device 100 may choose between access point 200 or one of the extenders 301, 302, 303. Moreover, user device 100 has the option of choosing between two possible frequency bands. The inventors have found that for a fixed location of the user device, the achieved performance of the user device, measured e.g. by means of the throughput, can vary significantly depending on which radio device (determined by the access point/extender and the used frequency band) the user device is connected to.

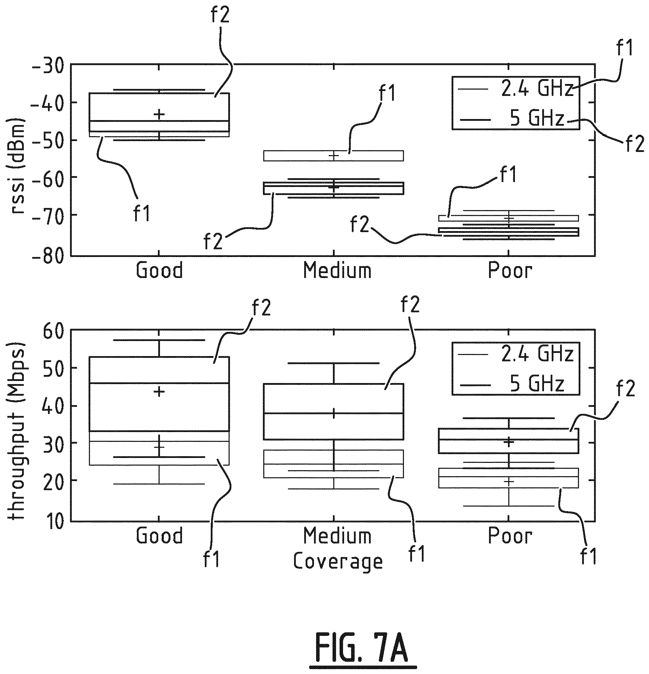

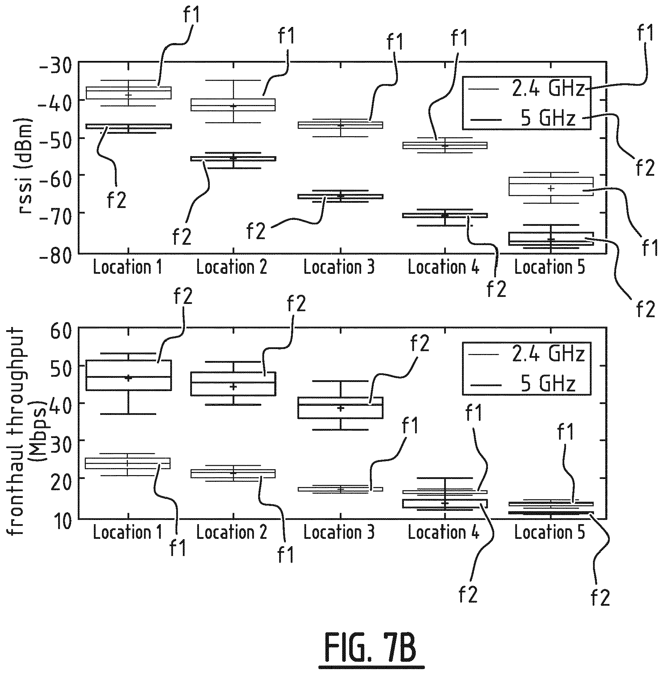

In figure 7A, the achievable performance of the user device is shown when connected directly to access point 200. It can be seen that, depending on the location of the user device (resulting in a different coverage) the RSSI (i.e. Receive Signal Strength Indication) and the throughput varies. Moreover, the RSSI and the throughput are further influenced by the frequency band that is being used for the connection. Figure 7B shows a similar chart for a user device 100 connected to an extender. Depending on the location of user device 100 and on the used operating frequency different values are achieved for the fronthaul throughput and the RSSI. Such measurements as illustrated in figures 7A and 7B allow determining empirical data regarding the performance of an access point or extender. When using prior art methods, the user device is not always connected to the radio device (determined by access point/extender and the used frequency band) that will provide the best performance, and consequently the best user experience. Exemplary embodiments of the invention provide a more intelligent method and algorithm allowing advising or forcing the user device to connect to the optimal radio.

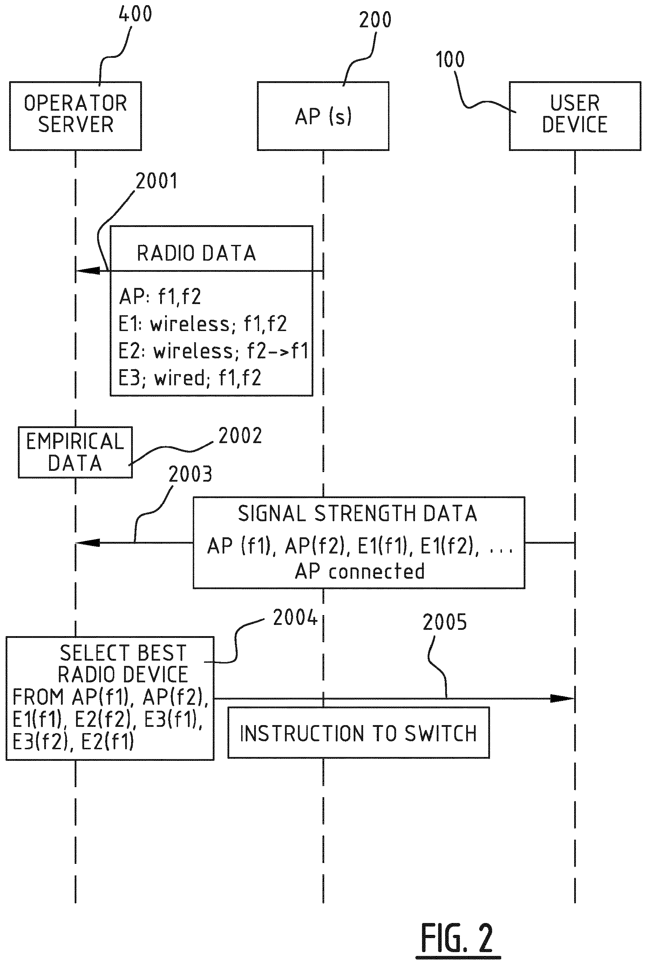

Figure 2 illustrates a first exemplary embodiment of a method for determining a radio device to be used by a user device. In the context of the present application the term "radio device" refers to the radio included in an access point or in an extender. In other words, in the example of figure 2, access point 200 is associated with two radio devices, a first radio device having an operating frequency band f1 and a second radio device having an operating frequency band f2. Similarly, extender 301 comprises two radio devices, a first radio device having an operating frequency band f1 for communicating with user device 100, and a second radio device having an operating frequency band f2 for communicating with user device 100.

In the exemplary embodiment of figure 2 the method comprises in a first step 2001 obtaining radio data for a plurality of radio devices to which user device 100 can connect. In the illustrated example, the radio data is sent by access point 200 to an operator server 400. If multiple access points 200 are present, radio data may be sent from the multiple access points 200 to the operator server 400. The radio data for the plurality of radio devices comprises data about each radio device. For the example of figure 1, the radio data may include:
- a radio device of access point 200 having a first operating frequency band f1;
- a radio device of access point 200 having a second operating frequency band f2;
- a radio device of E1 with wireless backhaul and with a fronthaul frequency band f1;
- a radio device of E1 with wireless backhaul and with a fronthaul frequency band f2;
- a radio device of E2 with wireless backhaul and with a fronthaul frequency band f1;
- a radio device of E3 with a wired backhaul and with a fronthaul frequency band f1; and
- a radio device of E3 with a wired backhaul and with a fronthaul frequency band f2.

In other words step 2001 implies that a network identification is performed. In this step, the list of radio devices to which the user device can connect, is determined. A further classification may be made with respect to the main access point radio devices and the extender radio devices, as in the example above. As for the extenders, a type of a backhaul link (wireless/wired) between the extender radio device and the main access point may be derived. Optionally, step 2001 may consist in performing the following sub-steps:
- Connected radio (connectedRadio) and neighboring AP list, both obtained from the user device may be compared with the SSIDs profiles of the access point and the associated device list (on wireless and Ethernet interface of the access point). As a result of this comparison, a list that accounts for the radio devices of a serving access point, as well as a list of radio devices of the extenders associated with the main access point may be deduced; it is noted that it is not necessary to used the data from the user device to prepare the radio data; however, using the Connected radio (connectedRadio) and neighboring AP list obtained from the user device, the data obtained from the access point may be verified using the data from the user device, so further improving the accuracy of the method;
- For each of the radio devices of the main access point, an operating frequency band is deduced, while for each of the radios on the extenders, a type of backhaul link to the main access point (i.e., wireless or wired), and a fronthaul frequency band is derived;
- The radio devices are classified into one of three possible groups: (i) radio devices on the main access point, (ii) a first cluster representing the extender's radio devices having a wired backhaul link, and (iii) a second cluster representing the extender's radio devices having a wireless backhaul link to the main access point. A resulting list may be labeled as a radioList; an example of such a list is given above for the exemplary embodiment of figure 1.

In a second step 2002, empirical data is obtained for the plurality of radio devices, wherein the empirical data comprises at least a plurality of respective measures based on the throughput between the user device and the plurality of radio devices. Such empirical data may be obtained based on throughput measurements as illustrated in figures 7A and 7B, which have been discussed above. The plurality of measures may be ranking values based on expertise and experimental investigations. For example, based on expertise it may be known that a wired extender has a higher ranking than a wireless extender. Optionally, the empirical data may be further based on measurements performed in the home network by a user device. For example, an operator could provide a user device with an app for performing and reporting such measurements.

In a third step 2003, signal strength data is obtained from the user device for the plurality of radio devices. In the illustrated embodiment of figure 2, the signal strength data is sent by user device 100 to the operator server 400. The signal strength data includes a signal strength value for each of the radio devices. In step 2003, it may also be indicated by user device 100 to operator server 400 to which radio device the user device 100 is currently connected.

In other words, in step 2003 a type of location assessment takes place; indeed, the user device location with respect to the radio devices available for connection is assessed by accounting the signal strength to each of the radio devices. By using typical user device data, the signal strength data (corresponding to the current user device location) between the user device and all radio devices from the radioList derived above, can be determined.

In step 2004 a radio device is selected from the plurality of radio devices, based on the obtained radio data, the obtained empirical data, and the obtained signal strength data. After having performed step 2004, it is being verified if the selected best radio device is different from the currently connected radio device. If the selected radio device is different from the currently connected radio device, an instruction is sent in step 2005 from the operator server 400 to user device 100 to instruct user device 100 to connect to the selected radio device.

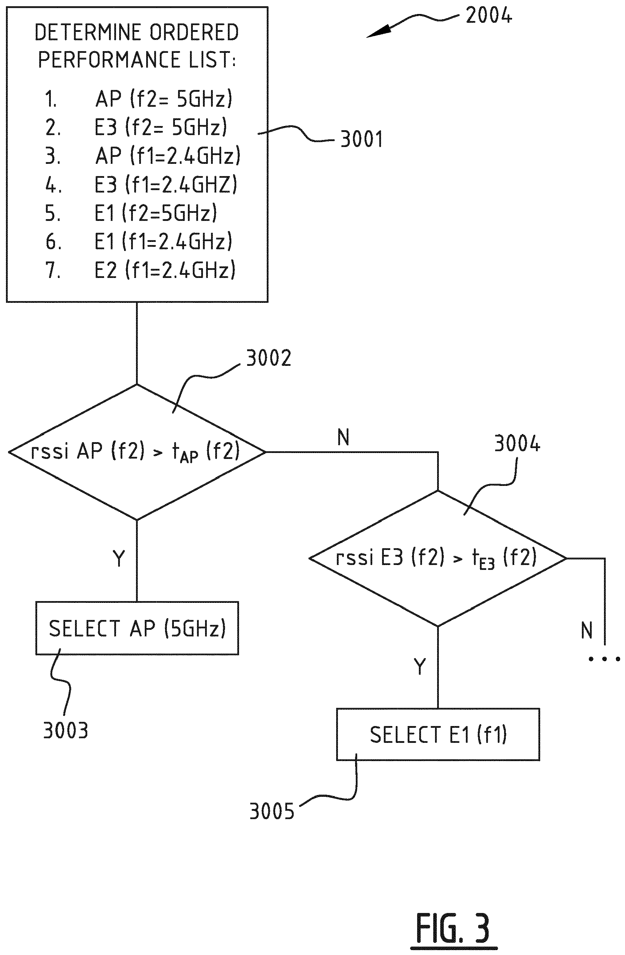

Figure 3 illustrates an exemplary embodiment of step 2004 in figure 2. In a first step 3001 an ordered performance list of the plurality of radio devices is determined based on at least the obtained radio data and the obtained empirical data, and preferably also based on the signal strength data. For the exemplary embodiment of figure 1 the list can be e.g. as follows:
1. radio device of access point 200 having frequency band f2;
2. radio device of E3 with a wired backhaul and with a fronthaul frequency band f2;
3. radio device of access point 200 having a second operating frequency band f1;
4. radio device of E3 with a wired backhaul and with a fronthaul frequency band f1;
5. radio device of E1 with wireless backhaul and with a fronthaul frequency band f2;
6. radio device of E1 with wireless backhaul and with a fronthaul frequency band f1;
7. radio device of E2 with wireless backhaul and with a fronthaul frequency band f1.

Based on the empirical data, it can be known e.g. that the throughput is better for a main access point 200 than for an extender in the same frequency band, and that the throughput is better for a wired extender (E3) than for a wireless extender (E1, E2) in the same frequency band.

In a following step 3002, an obtained signal strength value from the obtained signal strength data of the radio device with the best performance of the ordered performance list, here AP(f2), is compared with a threshold value, here t_{AP}(f2). If the obtained signal strength value is higher than the threshold value, the best radio device of the list is selected, here AP(f2), see step 3003. If the obtained signal strength value is not higher than the threshold value, an obtained signal strength value from the obtained signal strength data of the radio device with the second best performance of the ordered performance list, here E3(f2), is compared with a threshold value, here t_{E3}(f2), see step 3004. If the obtained signal strength value for E3(f2) is higher than the threshold value, the second best radio device of the list is selected, here E3(f2), see step 3005. If the obtained signal strength value for E3(f2) is not higher than the threshold value, the steps 3004, 3005 are repeated for the third best radio device of the list, etc. If this process results in a selected radio device, and this selected radio device is different from the currently connected radio device, as set out above in connection with figure 2, an instruction is sent to user device 100 to instruct user device 100 to connect to the selected radio device.

In other words, according to the exemplary embodiment of figure 3, a radio device can be selected as follows in order to achieve the highest possible throughput:
- using the radio data, e.g. the radioList derived above, a radio hierarchy (i.e. an ordered performance list) is created for the identified network. The higher the radio device is on the list, the better performance by user device when connected to it, should generally be;
- using the signal strength data, for the top radio device in hierarchy, a signal strength value, e.g. an RSSI value is obtained;
- starting from the top radio device, a condition related to the RSSI value is checked. If the condition is met, the radio device is selected as optimal, otherwise a next radio from the list is checked. The search continues until the condition is met. The optimal radio may be labeled as optimalRadio;
- if the condition is not met for all radio devices of the list, it may be determined that the user device is currently located in a coverage hole, and it may be recommended to install an extender, or to move closer to the access point, or to reposition the access point.

Next it is determined whether the currently connected radio is the optimal one, and the user device may be instructed accordingly e.g. as follows:
- Compare whether the connectedRadio is the same as optimalRadio obtained above.
- If yes, no action is needed and the method may be repeated at a later point in time. If the connectedRadio is not the same as optimalRadio, the user device may be instructed to connect to optimalRadio.

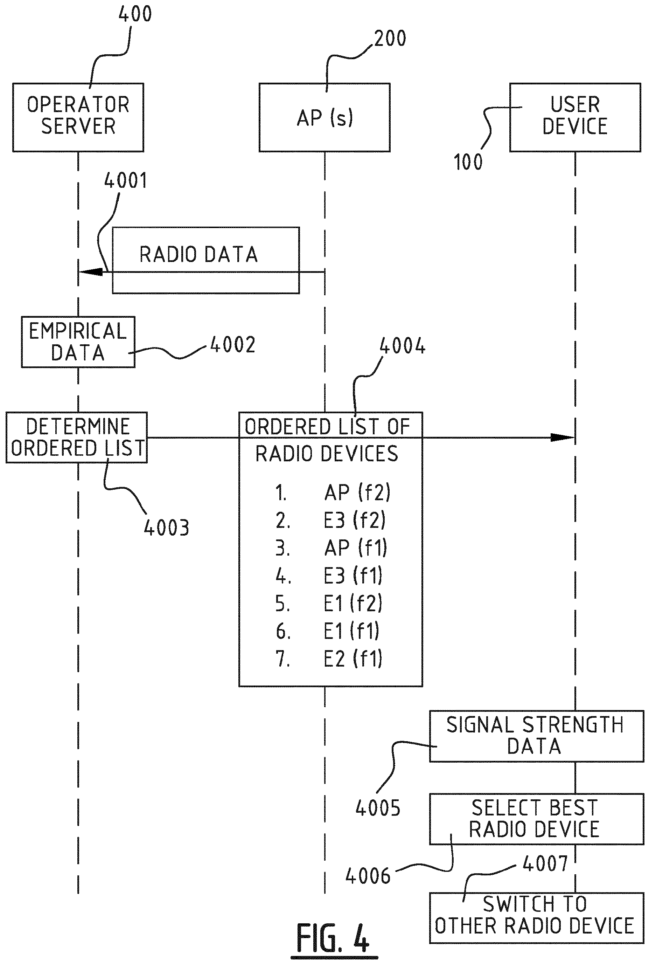

Figure 4 illustrates a second exemplary embodiment of a method for determining a radio device to be used by a user device. The method comprises in a first step 4001 obtaining radio data for a plurality of radio devices to which user device 100 can connect. In the illustrated example, the radio data is sent by access point 200 to an operator server 400. If multiple access points 200 are present, radio data may be sent from the multiple access points 200 to the operator server 400. The radio data for the plurality of radio devices comprises data about each radio device. For the example of figure 1, the radio data may include the data mentioned above in connection with figure 2.

In a second step 4002, empirical data is obtained for the plurality of radio devices, wherein the empirical data comprises at least a plurality of respective measures based on the throughput between the user device and the plurality of radio devices. Such empirical data may be obtained based on throughput measurements as illustrated in figures 7A and 7B, which have been discussed above.

In a third step 4003, an ordered performance list is determined at the operator server 400. For the exemplary embodiment of figure 1 the list can be e.g. as follows:
1. radio device of access point 200 having frequency band f2;
2. radio device of E3 with a wired backhaul and with a fronthaul frequency band f2;
3. radio device of access point 200 having a second operating frequency band f1;
4. radio device of E3 with a wired backhaul and with a fronthaul frequency band f1;
5. radio device of E1 with wireless backhaul and with a fronthaul frequency band f2;
6. radio device of E1 with wireless backhaul and with a fronthaul frequency band f1;
7. radio device of E2 with wireless backhaul and with a fronthaul frequency band f1.

In step 4004 this list is sent to the user device 100. This step may be repeated on a regular basis, e.g. periodically. Alternatively the list may be sent on request of the user device 100. In step 4005 signal strength data is obtained at the user device 100 for the plurality of radio devices. The signal strength data includes a signal strength value for each of the radio devices. In step 4006 a radio device is selected from the plurality of radio devices of the ordered performance list received in step 4004. This selection is further based on the obtained signal strength data. More in particular, the steps 3002-3005 of figure 3 may be performed in order to select the best radio device. After having performed step 4006, it is being verified if the selected best radio device is different from the currently connected radio device. If the selected radio device is different from the currently connected radio device, in step 4007 the user device 100 is connected to the selected radio device.

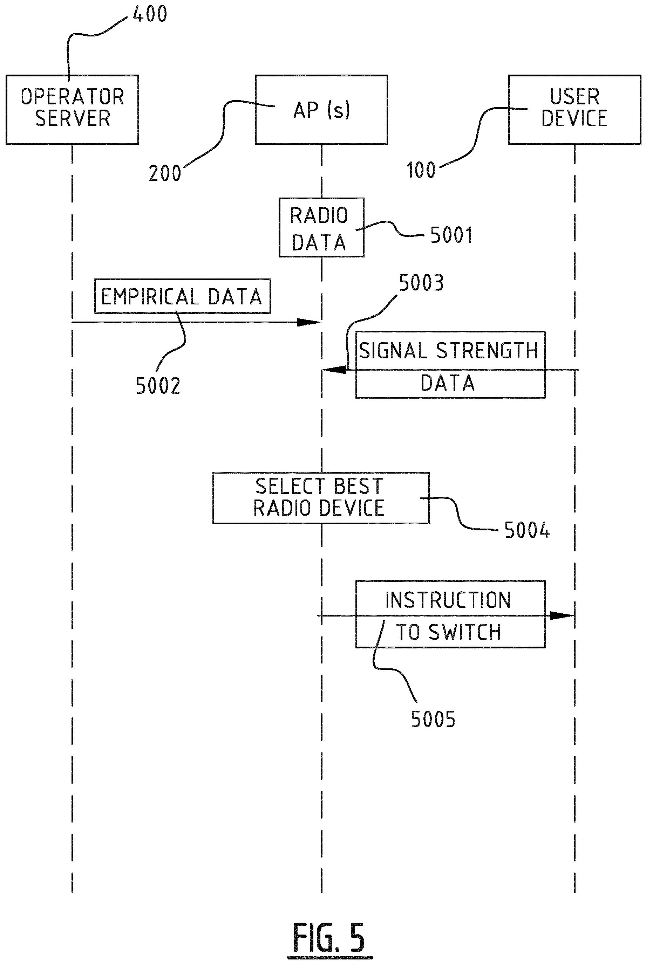

Figure 5 illustrates a third exemplary embodiment of a method for determining a radio device to be used by a user device. The method comprises in a first step 5001 obtaining radio data for a plurality of radio devices to which user device 100 can connect. In the illustrated example, the radio data is obtained in the main access point 200. If multiple access points 200 are present, radio data may be centralized in the main access point 200. The radio data for the plurality of radio devices comprises data about each radio device. For the example of figure 1, the radio data may include the data set out above in connection with figure 2.

In a second step 5002, empirical data is obtained for the plurality of radio devices, wherein the empirical data comprises at least a plurality of respective measures based on the throughput between the user device and the plurality of radio devices. Such empirical data may be obtained from the operator server or may be available in the access point, see step 5002.[ND1][LA(-B2]

In a third step 5003, signal strength data is obtained from the user device for the plurality of radio devices. In the illustrated embodiment of figure 5, the signal strength data is sent by user device 100 to the access point 200. The signal strength data includes a signal strength value for each of the radio devices. In step 5003, it may also be indicated by user device 100 to access point 200 to which radio device the user device 100 is currently connected.

In step 5004 a radio device is selected from the plurality of radio devices, based on the obtained radio data, the obtained empirical data, and the obtained signal strength data. After having performed step 5004, it is being verified if the selected best radio device is different from the currently connected radio device. If the selected radio device is different from the currently connected radio device, an instruction is sent in step 5005 from the access point 200 to user device 100 to instruct user device 100 to connect to the selected radio device.

In embodiments of the invention a TR-98/181 standard compliant access point and mobile user device may be used. Such an access point allows to collect data related to the access point itself, as well as data related to associated devices on wireless and Ethernet interfaces, such as
Device.WiFi.SSID.{i}.
Device.WiFi.AccessPoint.{i}.AssociatedDevice.{i}.
Device.Ethernet.Interface.{i}.,

From this data the radio data specified above can be derived. More in particular this data allows to determine the frequency band(s) of the access point 200 itself, as well as the frequency band(s) of the extenders 301, 302, 303 which are connected (wired or wirelessly) to the access point.

The mobile user device allows collecting signal strength data related to signal strength between the user device and the plurality of radio devices, i.e. a signal strength value for the connected access point or extender as well as the signal strength values for the other access point(s) or extender(s). The latter can be obtained though a Wi-Fi scan -of any neighboring access points and extenders.

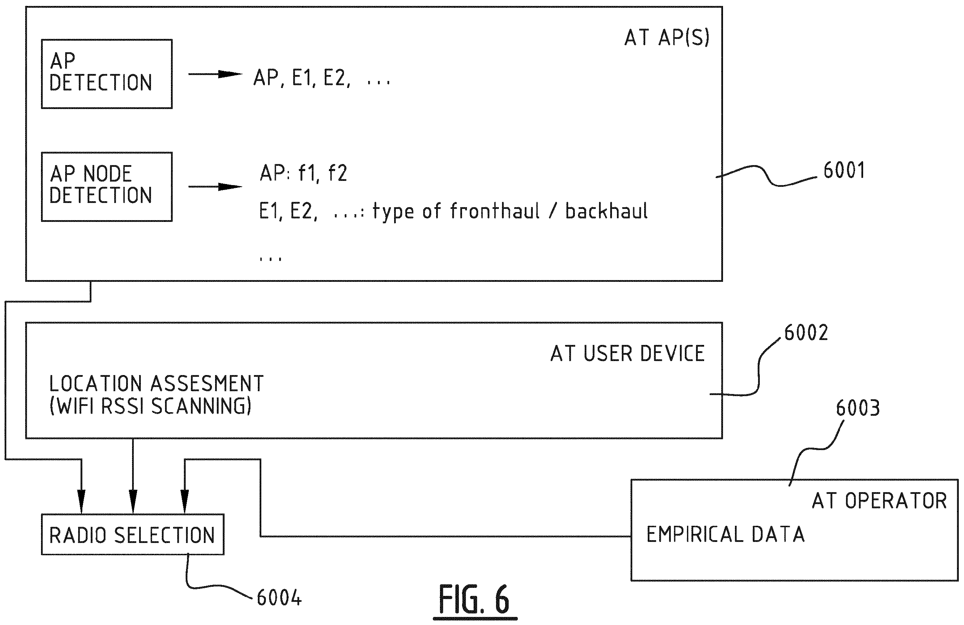

Figure 6 further illustrates exemplary embodiments of the method of the invention, with:
- at the main access point (see block 6001) access point detection and access point mode detection in order to derive the radio data;
- at the user device (see block 6002), location assessment using signal strength data;
- at the operator server (see block 6003), the obtaining of empirical data.

Based on the obtained radio data, signal strength data and empirical data, a radio device of the plurality of radio devices to which a user device can connect is determined, see block 6004.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media.

The embodiments are also intended to cover computers programmed to perform said steps of the above-described methods.

The functions of the various elements shown in the figures, including any functional blocks labelled as "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A method for determining a radio device to be used by a user device; said user device being currently connected to a radio device of a plurality of radio devices to which the user device can connect; each radio device of said plurality of radio devices being part of an access point or of an extender connected in a wireless or wired manner to an access point; said method comprising the steps of:
obtaining radio data for the plurality of radio devices;
obtaining empirical data for said plurality of radio devices, said empirical data comprising at least a plurality of respective measures based on the throughput between the user device and the plurality of radio devices;
obtaining signal strength data from the user device for said plurality of radio devices;
selecting a radio device from said plurality of radio devices, based on said obtained radio data, said obtained empirical data, and said obtained signal strength data;
and
at least if the selected radio device is different from the currently connected radio device, informing the user device about the selected device.

2. The method of the preceding claim, wherein the step of selecting a radio device comprises:
determining an ordered performance list of said plurality of radio devices based on at least the obtained radio data and the obtained empirical data;
comparing for a radio device with the best performance of said ordered performance list, an obtained value from the obtained signal strength data with a threshold value;
if the obtained value is higher than the threshold value, selecting the radio device with the best performance;
if the obtained value is not higher than the threshold value, repeating the step of comparing for the next best radio device of the ordered performance list.

3. The method of the preceding claim, wherein the step of determining an ordered performance list is further based on the obtained signal strength data.

4. The method of any preceding claim, wherein the obtained radio data includes:
for each radio device of an access point: an operating frequency band;
for each radio device of an extender: a backhaul interface type comprising wireless or wired, and a fronthaul operating frequency band.

5. The method of the preceding claim, wherein the empirical data comprises a measure based the throughput between the user device and the plurality of radio devices, for each frequency band separately; and/or
wherein the obtained radio data is derived from an SSID profile of the access point.

6. The method of any preceding claim, wherein the obtained signal strength data comprises an RSSI value for the connected radio device and Wi-Fi-scan data for the other radio device(s) of said plurality of radio devices.

7. The method of any preceding claim, wherein an operator server is provided remotely of said plurality of radio devices, wherein
the step of obtaining radio data comprises receiving the radio data at the operator server from the access point;
the step of obtaining empirical data is performed at the operator server;
the step of obtaining signal strength data from the user device for said plurality of radio devices comprises receiving said signal strength data at an operator server from the user device;
the step of selecting a radio device from said plurality of radio devices is performed at the operator server;
the step of informing the user device comprises sending an instruction from the operator server to the user device.

8. The method of any one of the claims 1-6, wherein an operator server is provided remotely of said plurality of radio devices, wherein
the step of obtaining radio data comprises receiving the radio data at the operator server from the access point;
the step of obtaining empirical data is performed at the operator server;
the step of obtaining signal strength data between the user device and said plurality of radio devices is performed at the user device;
the step of selecting a radio device comprises:
at said operator server, determining an ordered performance list of said plurality of radio devices based on at least the obtained radio data and the obtained empirical data;
sending the ordered performance list to the user device;
at said user device, selecting a radio device of said plurality of radio devices based on the received ordered performance list and the obtained signal strength data.

9. The method of any one of the claims 1-6, wherein an operator server is provided remotely of said plurality of radio devices, wherein
the step of obtaining radio data is performed at an access point;
the step of obtaining empirical data comprises receiving empirical data from the operator server at said access point;
the step of obtaining signal strength data between the user device and said plurality of radio devices comprises receiving said signal strength data from the user device at said access point;
the step of selecting a radio device is performed at said access point;
the step of informing the user device comprises sending an instruction from said access point to said user device.

10. A computer program product comprising computer-executable instructions for performing the method of any one of the preceding claims, when the program is run on a computer.

11. An operator server configured for determining a radio device to be used by a user device;
said operator server being configured:
to receive radio data for a plurality of radio devices, from an access point;
to obtain empirical data for said plurality of radio devices, said empirical data comprising at least a plurality of respective measures based on the throughput between the user device and the plurality of radio devices;
to receive signal strength data from the user device for said plurality of radio devices;
to select a radio device from said plurality of radio devices, based on said received radio data, said obtained empirical data, and said received signal strength data;
at least if the selected radio device is different from a currently connected radio device, to send an instruction to the user device to connect to the selected radio device.

12. A user device configured
- to receive from a remotely located operator server an instruction to connect to a selected radio device of said plurality of radio devices; and
- if the selected radio device is different from a currently connected radio device, to connect to the selected radio device.

13. An operator server configured for communicating with a user device; said operator server being configured:
- to receive radio data for a plurality of radio devices to which the user device can connect, from an access point;
- to obtain empirical data for said plurality of radio devices, said empirical data comprising at least a plurality of respective measures based on the throughput between the user device and the plurality of radio devices;
- to determine an ordered performance list of said plurality of radio devices based on at least the received radio data and the obtained empirical data;
- to send the ordered performance list to the user device.

14. A user device configured:
- to receive from an operator server an ordered performance list of a plurality of radio devices to which the user device can connect, wherein the order of the ordered performance list is based on at least radio data for the plurality of radio devices and empirical data for the plurality of radio devices, said empirical data comprising at least a plurality of respective measures based on the throughput between the user device and the plurality of respective radio devices;
- to select a radio device from the plurality of radio devices based on the received ordered performance list and signal strength data between the user device and said plurality of radio devices; and
- at least if the selected radio device is different from the currently connected radio device, to connect to the selected radio device.

15. An access point configured for determining a radio device to be used by a user device; said access point being configured:
- to obtain radio data for a plurality of radio devices to which a user device can connect;
- to receive empirical data for said plurality of radio devices, from a remotely located operator server; said empirical data comprising at least a plurality of respective measures based on the throughput between the user device and the plurality of radio devices;
- to receive signal strength data from the user device for said plurality of radio devices;
- to select a radio device from said plurality of radio devices, based on said obtained radio data, said received empirical data, and said received signal strength data;
- at least if the selected radio device is different from the currently connected radio device, to send an instruction to the user device to connect to the selected radio device.
